(19) **Europäisches Patentamt**
**European Patent Office**
**Office européen des brevets**

(11) **EP 4 258 378 A1**

(12) **EUROPEAN PATENT APPLICATION**
published in accordance with Art. 153(4) EPC

(43) Date of publication:
**11.10.2023 Bulletin 2023/41**

(21) Application number: **21900678.0**

(22) Date of filing: **02.12.2021**

(51) International Patent Classification (IPC):
**H01M 4/131** (2010.01)   **H01M 4/485** (2010.01)
**H01M 4/525** (2010.01)   **H01M 4/62** (2006.01)
**H01M 10/0525** (2010.01)   **H01M 10/0562** (2010.01)
**H01M 10/058** (2010.01)

(52) Cooperative Patent Classification (CPC):
**H01M 4/131; H01M 4/485; H01M 4/525;**
**H01M 4/62; H01M 10/0525; H01M 10/0562;**
**H01M 10/058;** Y02E 60/10

(86) International application number:
**PCT/JP2021/044315**

(87) International publication number:
**WO 2022/118928 (09.06.2022 Gazette 2022/23)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **03.12.2020 JP 2020201014**

(71) Applicant: **Maxell, Ltd.**
**Kyoto 618-8525 (JP)**

(72) Inventors:
• **SEKIYA, Tomohito**
**Kyoto, 618-8525 (JP)**
• **KATAYAMA, Yuya**
**Kyoto, 618-8525 (JP)**
• **TSUCHIE, Hironori**
**Kyoto, 618-8525 (JP)**

(74) Representative: **Diehl & Partner**
**Patent- und Rechtsanwaltskanzlei mbB**
**Erika-Mann-Straße 9**
**80636 München (DE)**

(54) **ALL-SOLID-STATE BATTERY SYSTEM**

(57) An all-solid-state battery system according to this application includes an all-solid-state battery and a charging apparatus, in which the all-solid-state battery includes a positive electrode, a negative electrode, and a solid electrolyte layer located between the positive electrode and the negative electrode, the negative electrode contains a negative-electrode active material and a solid electrolyte, the negative-electrode active material contains a lithium titanium oxide, and a negative electrode discharge utilization rate X calculated using the following equation is 134 mAh/g or less.

The negative electrode discharge utilization rate X = battery capacity Q (mAh)/ mass of the negative-electrode active material in the negative electrode (g), where the battery capacity Q is a discharge capacity (mAh) obtained when the battery is charged with a constant current at 0.2 C to the upper limit charging voltage, charged with a constant voltage to 0.002 C, and discharged at 0.002 C to 1 V

FIG. 1

**Description**

Technical Field

The present invention relates to an all-solid-state battery system having excellent discharge capacity properties after a battery is stored.

Background Art

In recent years, the development of portable electronic devices such as cellular phones and laptop personal computers, the practical use of electric vehicles, and the like have led to the need for compact and lightweight secondary batteries that have a high capacity and a high energy density.

Currently, in lithium secondary batteries that can meet this demand, especially lithium-ion secondary batteries, a lithium-containing composite oxide is used as a positive-electrode active material, graphite or the like is used as a negative-electrode active material, and an organic electrolyte solution containing an organic solvent and a lithium salt as nonaqueous electrolytes is used.

Following further development of devices that use lithium-ion secondary batteries, there is a demand for lithium-ion secondary batteries having an increased life-span, a higher capacity, and a higher energy density, and a high degree of reliability is also required for the lithium-ion secondary batteries having an increased life-span, a higher capacity, and a higher energy density.

However, since an organic electrolyte solution used in a lithium-ion secondary battery contains a flammable organic solvent, the organic electrolyte solution may abnormally generate heat when an abnormal situation such as a short circuit occurs in the battery. In recent years, as the energy density of lithium-ion secondary batteries and the amount of an organic solvent in the organic electrolyte solution have been increased, there is a growing need for reliability in lithium-ion secondary batteries.

Under these circumstances, all-solid-state lithium secondary batteries (all-solid-state batteries) in which no organic solvents are used have been gaining attention. An all-solid-state battery includes, instead of conventional organic solvent-based electrolytes, a molded body made of a solid electrolyte in which no organic solvents are used, and is very safe because there is no risk that the solid electrolyte will abnormally generate heat.

All-solid-state batteries are very safe as well as being highly reliable and highly environmentally resistant, and have an increased life-span. Therefore, it is anticipated that all-solid-state batteries will become maintenance-free batteries that can continue to contribute to the development of society, as well as to safety and security. Providing all-solid-state batteries to society will contribute to achievement of the following goals of the 17 Sustainable Development Goals (SDGs) established by the United Nations: Goal 12 (to ensure sustainable production and consumption patterns), Goal 3 (to ensure healthy lives and promote well-being for all people of all ages), Goal 7 (to ensure access for all people to affordable, reliable, sustainable and modern energy), and Goal 11 (to achieve inclusive, safe, resilient and sustainable cities and human settlements).

Patent Document 1 discloses provision of an all-solid-state battery including a positive electrode layer, a negative electrode layer, and a solid electrolyte layer formed between the positive electrode layer and the negative electrode layer, the all-solid-state battery having a favorable initial discharge capacity as a result of controlling the capacity ratio of the negative electrode capacity to the positive electrode capacity in a specific range.

Prior Art Documents

Patent Document

[Patent Document 1] JP 2020-004685A

Disclosure of Invention

Problem to be Solved by the Invention

Recent times have seen a rapid increase in the number of fields to which all-solid-state batteries are applied. Therefore, the batteries need to sufficiently exhibit their functions even after being stored at high temperatures for a certain period of time, for example.

Also, even in an all-solid-state battery system in which the all-solid-state battery is used, the maximum capability of the all-solid-state battery needs to be used.

The present invention was achieved in light of the aforementioned circumstances, and it is an object thereof to provide an all-solid-state battery system having excellent discharge capacity properties after the battery is stored.

Means for Solving Problem

An all-solid-state battery system according to the present invention includes an all-solid-state battery and a charging apparatus, in which the all-solid-state battery includes a positive electrode, a negative electrode, and a solid electrolyte layer located between the positive electrode and the negative electrode, the negative electrode contains a negative-electrode active material and a solid electrolyte, the negative-electrode active material contains a lithium titanium oxide, and a negative electrode discharge utilization rate X calculated using the following equation is 134 mAh/g or less.

The negative electrode discharge utilization rate X = battery capacity Q (mAh)/ mass of the negative-electrode active material in the negative electrode (g),
where the battery capacity Q is a discharge capacity (mAh) obtained when the battery is charged with a constant current at 0.2 C to the upper limit charging voltage, charged with a constant voltage to 0.002 C, and discharged at 0.002 C to 1 V

Effects of the Invention

According to the present invention, it is possible to provide an all-solid-state battery system having excellent discharge capacity properties after a battery is stored.

Brief Description of Drawings

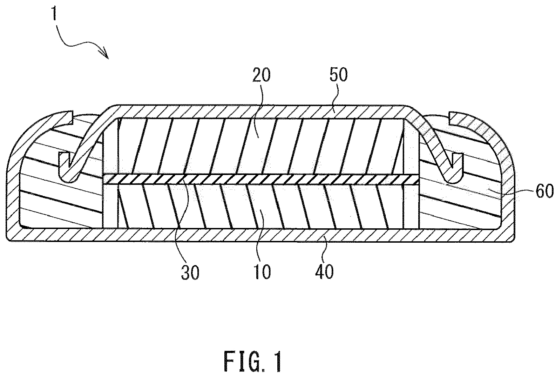

[FIG. 1] FIG. 1 is a schematic cross-sectional view showing an example of an all-solid-state battery used in an all-solid-state battery system according to the present invention.

Description of the Invention

All-Solid-State Battery

An all-solid-state battery used in an all-solid-state battery system according to the present invention includes a negative electrode containing a negative-electrode active material and a solid electrolyte, a positive electrode, and a solid electrolyte layer located between the negative electrode and the positive electrode.

Also, a lithium titanium oxide is used as a negative-electrode active material in the all-solid-state battery used in the present invention. If a lithium titanium oxide is used as a negative-electrode active material in the all-solid-state battery, the negative electrode potential hardly changes during charging. However, as charging proceeds, the negative electrode potential rapidly decreases. Thereafter, if charging is continued, lithium ions further move from the positive electrode to the negative electrode. However, acceptance of lithium ions by the lithium titanium oxide is close to saturation, and as a result, the resistance of the lithium titanium oxide increases.

Also, in general, if a battery is stored at high temperatures, the resistance of the battery increases. If a battery is designed to be charged to a region where the resistance of the lithium titanium oxide becomes high, the lithium ion acceptability on the negative electrode side will decrease during charging, and the charging capacity will decrease due to an increase in resistance due to the battery being stored at high temperatures. As a result, the recovered capacity decreases after the battery has been stored at high temperatures.

In view of this, the inventors of the present invention found that it is possible to inhibit the resistance of a lithium titanium oxide from increasing by adjusting the negative electrode discharge utilization rate X of the all-solid-state battery to 134 mAh/g or less, and performing control such that the battery is not charged until the potential decreases at the end of charging when a lithium titanium oxide is used as a negative-electrode active material.

The negative electrode discharge utilization rate X in the all-solid-state battery system according to the present invention can be represented by the following equation.

The negative electrode discharge utilization rate X = battery capacity Q (mAh)/ mass of the negative-electrode active material in the negative electrode (g),
where the battery capacity Q is a discharge capacity (mAh) obtained when the battery is charged with a constant current at 0.2 C to the upper limit charging voltage, charged with a constant voltage to 0.002 C, and discharged at 0.002 C to 1 V

The negative electrode discharge utilization rate can be determined based on the battery capacity and the amount of the negative-electrode active material, and thus can be controlled by adjusting the battery capacity and the amount of the negative-electrode active material. The negative electrode discharge utilization rate can be controlled using a method for adjusting the amount of a positive-electrode active material and/or the amount of a negative-electrode active material in a battery, adjusting the type of positive-electrode active material, adjusting the upper limit voltage for charging a battery, and the like.

Negative Electrode

A negative electrode of an all-solid-state battery in the present invention contains a negative-electrode active material and a solid electrolyte, and a lithium titanium oxide as the negative-electrode active material. The negative electrode may contain a conductive aid as needed. The negative electrode can be produced by mixing these materials without using a solvent to prepare a negative-electrode mixture, and shaping the negative-electrode mixture into pellets, for example. Also, a negative electrode may be formed by attaching a molded body made of the negative-electrode mixture obtained in the above manner to a current collector.

Further, a molded body made of the negative-electrode mixture may be formed by preparing a negative-electrode mixture-containing composition by mixing the negative-electrode mixture and a solvent, applying the composition to a current collector or a substrate including a solid electrolyte layer, which opposes the negative electrode, drying the composition, and performing pressing processing.

Examples of the negative electrode include a negative electrode constituted only by the molded body, and a negative electrode having a structure in which the molded body and a current collector are formed as a single body.

Examples of the lithium titanium oxide include oxides represented by General Composition Formula (1) below, for example.

$$Li[Li_{1/3-s}M^1{}_sTi_{5/3-t}M^2{}_t]O_4 \qquad (1)$$

In General Composition Formula (1) above, $M^1$ is at least one element selected from the group consisting of Na, Mg, K, Ca, Sr, and Ba, $M^2$ is at least one element selected from the group consisting of Al, V, Cr, Fe, Co, Ni, Zn, Ym, Zr, Nb, Mo, Ta, and W, and s and t respectively satisfy $0 \leq s < 1/3$ and $0 \leq t < 5/3$.

That is, in the lithium titanium oxide represented by General Composition Formula (1) above, a portion of the Li site may be substituted by the element $M^1$. Note that, in General Composition Formula (1), s, which represents the proportion of the element $M^1$, is preferably less than 1/3. In the lithium titanium oxide represented by General Composition Formula (1) above, s, which represents the proportion of the element $M^1$, may be 0 because Li does not need to be substituted by the element $M^1$.

Also, in the lithium titanium oxide represented by General Composition Formula (1) above, the element $M^2$ is a component for enhancing the electronic conductivity of the lithium titanium oxide, and when t, which represents the proportion of the element $M^2$, satisfies $0 \leq t < 5/3$, it is possible to favorably ensure the effect of enhancing the electronic conductivity.

A negative-electrode active material used in lithium-ion secondary batteries other than the lithium titanium oxide can also be used together with the lithium titanium oxide for the negative-electrode active material. However, the percentage of the negative-electrode active material other than the lithium titanium oxide to the total amount of the negative-electrode active material is preferably 30 mass% or less.

From the viewpoint of improving the output properties and further increasing the capacity of the all-solid-state battery, the content of the negative-electrode active material in the negative-electrode mixture is 40 mass% or more, and preferably 45 mass% or more, and 60 mass% or less, and preferably 55 mass% or less.

It is preferable to use a sulfide-based solid electrolyte as a solid electrolyte of the negative electrode. Sulfide-based solid electrolytes have high ionic conductivity among solid electrolytes that can be used in all-solid-state batteries, and the output properties of the battery are improved by using a sulfide-based solid electrolyte not only for the negative electrode but also for the positive electrode and the solid electrolyte layer.

It is particularly preferable to use a sulfide-based solid electrolyte represented by General Composition Formula (2) as a solid electrolyte of the negative electrode.

$$Li_{7-x}PS_{6-x}Cl_yBr_z \qquad (2)$$

where in General Composition Formula (2) above, x, y, and z satisfy x=y+z, $1.0 < x \leq 1.8$, and $0.1 \leq z/y \leq 10.0$.

The solid electrolyte represented by General Composition Formula (2) is an argyrodite-type sulfide-based solid electrolyte, and among solid electrolytes that can be used in all-solid-state batteries, has particularly excellent ionic conductivity, and can contribute to improving the output properties of the battery. Also, the output properties of the battery are further improved by using an argyrodite-type sulfide-based solid electrolyte not only for the negative electrode but also for the positive electrode and the solid electrolyte layer.

In the case of an argyrodite-type sulfide-based solid electrolyte, if the negative electrode discharge utilization rate X is more than 134 mAh/g, the solid electrolyte of the negative electrode undergoes a reduction reaction, and the resistance tends to increase. Therefore, in the case of an argyrodite-type sulfide-based solid electrolyte, as a result of setting the negative electrode discharge utilization rate X to 134 mAh/g or less, it is possible to suppress a reduction reaction of the solid electrolyte and to prevent an increase in the resistance. As a result, it is possible to prevent a decrease in the recovered capacity after the battery is stored at high temperatures.

Although it is sufficient to only use a sulfide-based solid electrolyte for a negative electrode, other solid electrolytes can also be used together with the sulfide-based solid electrolyte. Examples of the solid electrolyte that can be used in combination with the sulfide-based solid electrolyte include hydride-based solid electrolytes and oxide-based solid electrolytes.

Examples of the hydride-based solid electrolytes include $LiBH_4$, and solid solutions of $LiBH_4$ and a following alkali metal compound (e.g., solid solutions in which the mole ratio between $LiBH_4$ and the alkali metal compound is 1:1 to 20:1). At least one selected from the group consisting of lithium halides (e.g., LiI, TiBr, LiF, and LiCl), rubidium halides (e.g., RbI, RbBr, RbF, and RbCl), cesium halides (e.g., CsI, CsBr, CsF, and CsCl), lithium amides, rubidium amides, and cesium amides can be used as the alkali metal compound in the above-mentioned solid solution.

Examples of the oxide-based solid electrolytes include $Li_7La_3Zr_2O_{12}$, $LiTi(PO_4)_3$, $LiGe(PO_4)_3$, and $LiLaTiO_3$.

However, it is preferable that the percentage of the solid electrolyte other than the sulfide-based solid electrolyte to the total amount of the solid electrolyte used in the negative-electrode mixture is 30 mass% or less.

From the viewpoint of further improving the output properties and further increasing the capacity of the all-solid-state battery, the content of the solid electrolyte in the negative-electrode mixture is preferably 50 parts by mass or more, more preferably 60 parts by mass or more, and even more preferably 70 parts by mass or more, and preferably 130 parts by mass or less, more preferably 120 parts by mass or less, and even more preferably 110 parts by mass or less, with respect to 100 parts by mass of the content of the negative-electrode active material.

A carbon material such as carbon black or graphene can be used as a conductive aid for a negative electrode. In particular, when graphene is used as a conductive aid, a side reaction between the solid electrolyte and graphene is unlikely to occur, and a recovered capacity maintenance ratio in high-temperature storage tends to be high.

Specifically, graphene has the following properties. The average particle diameter of the graphene particles is preferably 4 $\mu$m or more, more preferably 6 $\mu$m or more in order to increase electronic conductivity of the negative-electrode mixture, and preferably 15 $\mu$m or less, and more preferably 12 $\mu$m or less so as not to inhibit ionic conductivity.

The average particle diameter of graphene particles used in this specification refers to the value of the 50% diameter ($D_{50}$) in a volume-based integrated fraction when the integrated volume is calculated based on particles with a small particle size, using a particle size distribution measuring device (Microtrac particle size analyzer "HRA9320" manufactured by Nikkiso Co., Ltd., etc.).

The BET specific surface area of graphene particles is preferably 20 $m^2$/g or more, and more preferably 22 $m^2$/g or more in order to increase the electronic conductivity of a molded body made of the negative-electrode mixture, and preferably 35 $m^2$/g or less, and more preferably 32 $m^2$/g or less in order to facilitate dispersion of graphene particles in the negative-electrode mixture.

The BET specific surface area of the graphene particles is a value determined using the BET method conforming to Japanese Industrial Standards (JIS) K6217, and can be measured using a specific surface area measuring device (e.g., "Macsorb HM model-1201" manufactured by Mountech Co., Ltd.) that employs a nitrogen adsorption method, for example.

The thickness of graphene is preferably 5 nm or more in order to increase the electronic conductivity of the negative-electrode mixture, and preferably 100 nm or less, and more preferably 50 nm or less in order to increase the filling properties of the positive-electrode mixture under pressure.

From the viewpoint of further improving the output properties and further increasing the capacity of the all-solid-state battery, the content of the conductive aid in the negative-electrode mixture is preferably 10 parts by mass or more, more preferably 12 parts by mass or more, and even more preferably 15 parts by mass or more, and preferably 30 parts by mass or less, more preferably 25 parts by mass or less, and even more preferably 22 parts by mass or less, with respect to 100 parts by mass of the content of the negative-electrode active material.

A resin binder may be optionally added to the negative-electrode mixture. Examples of the resin binder include fluororesins such as polyvinylidene fluoride (PVDF). However, the resin binder also functions as a resistance component in the negative-electrode mixture, and thus it is desirable that the amount of the resin binder is as small as possible. Therefore, it is preferable that no resin binder is added to a negative-electrode mixture, or if a resin binder is added thereto, the content of the resin binder is 0.5 mass% or less. The content of the resin binder in the negative-electrode mixture is more preferably 0.3 mass% or less, and even more preferably 0 mass% (i.e., no resin binder is added).

When a current collector is used in the negative electrode, examples of the current collector include foils, punched metals, nets, expanded metals, and foamed metals that are made of copper or nickel; and carbon sheets.

A molded body made of a negative-electrode mixture can be formed by compressing, using compression molding or the like, the negative-electrode mixture prepared by mixing the negative-electrode active material, a solid electrolyte, and a conductive aid, and a binder and the like that are added as needed, for example.

When a negative electrode is to have a current collector, the negative electrode can be produced by attaching a molded body made of a negative-electrode mixture obtained using the above-described method to a current collector through clamping or the like.

From the viewpoint of increasing the capacity of a battery, the thickness of a molded body made of a negative-electrode mixture (when the negative electrode has a current collector, the thickness thereof refers to the thickness of the molded body made of a negative-electrode mixture per side of the current collector. The same applies to the following.) is preferably 200 $\mu$m or more. Note that, in general, the output properties of the battery tend to be improved by reducing the thickness of a positive electrode and a negative electrode. However, according to the present invention, it is possible to enhance the output properties thereof even when a molded body made of a negative-electrode mixture has a thickness of 200 $\mu$m or more. Also, the thickness of the molded body made of a negative-electrode mixture is usually 3000 $\mu$m or less.

Positive Electrode

The positive electrode of the all-solid-state battery includes a molded body made of a positive-electrode mixture containing a positive-electrode active material, a solid electrolyte, a conductive aid, and the like, and examples thereof include a positive electrode constituted only by the molded body, and a positive electrode having a structure in which the molded body and a current collector are formed as a single body.

There is no particular limitation on the positive-electrode active material as long as it is a positive-electrode active material that is used in conventionally known lithium-ion secondary batteries, that is, an active material that is capable of occluding and releasing Li ions, such as lithium-containing composite oxides. Specific examples of the positive-electrode active material include spinel-type lithium manganese composite oxides represented by $LiM_xMn_{2-x}O_4$ (where M is at least one element selected from the group consisting of Li, B, Mg, Ca, Sr, Ba, Ti, V, Cr, Fe, Co, Ni, Cu, Al, Sn, Sb, In, Nb, Mo, W, Y, Ru, and Rh, and x satisfies $0.01 \leq x \leq 0.5$), layered compounds represented by $Li_xNi_{(1-y-z)}Mn_yM_zO_{(2-k)}F_l$ (where M is at least one element selected from the group consisting of Co, Mg, Al, B, Ti, V, Cr, Fe, Cu, Zn, Zr, Mo, Sn, Ca, Sr, and W, and x y, z, k, and l satisfy $0.8 \leq x \leq 1.2$, $0 \leq y < 0.5$, $0 \leq z \leq 0.5$, $k+l < 1$, $-0.1 \leq k \leq 0.2$, and $0 \leq l \leq 0.1$), lithium cobalt composite oxides represented by $LiCo_{1-x}M_xO_2$ (where M is at least one element selected from the group consisting of Al, Mg, Ti, Zr, Fe, Ni, Cu, Zn, Ga, Ge, Nb, Mo, Sn, Sb, and Ba, and x satisfies $0 \leq x \leq 0.5$), lithium nickel composite oxides represented by $LiNi_{1-x}M_xO_2$ (where M is at least one element selected from the group consisting of Al, Mg, Ti, Zr, Fe, Co, Cu, Zn, Ga, Ge, Nb, Mo, Sn, Sb, and Ba, and x satisfies $0 \leq x \leq 0.5$), and olivine-type composite oxides represented by $LiM_{1-x}N_xPO_4$ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, and Ba, and x satisfies $0 \leq x \leq 0.5$). These compounds may be used alone or in combination of two or more.

Out of these oxides, lithium cobalt oxide is preferably used. Because the lithium cobalt oxide has a high true density and a high operating potential, the energy density per volume can be increased by using the lithium cobalt oxide as a positive-electrode active material. Further, as a result of setting the content of the positive-electrode active material in the positive-electrode mixture to a specific amount, it is possible to obtain a well-balanced all-solid-state battery with high capacity and high output.

The average particle diameter of the positive-electrode active material is preferably 1 $\mu$m or more, more preferably 2 $\mu$m or more, and preferably 10 $\mu$m or less, and more preferably 8 $\mu$m or less. Note that the positive-electrode active material may be primary particles or secondary particles obtained through aggregation of primary particles. When a positive-electrode active material having an average particle diameter in the above range is used, a large interface with the solid electrolyte can be obtained, thus enhancing load properties of the battery.

The average particle diameter of a positive-electrode active material used in this specification refers to the value of the 50% diameter ($D_{50}$) in a volume-based integrated fraction when the integrated volume is calculated based on particles with a small particle size, using a particle size distribution measuring device (Microtrac particle size analyzer "HRA9320" manufactured by Nikkiso Co., Ltd., etc.).

It is preferable that the content of the positive-electrode active material in the positive-electrode mixture is 50 mass% or more and 80 mass% or less. When the content of the positive-electrode active material in the positive-electrode mixture is in this range, it is possible to obtain a well-balanced all-solid-state battery with the discharge capacity and expansion/shrinkage. The content of the positive-electrode active material in the positive-electrode mixture is more preferably 60 mass% or more, and more preferably 70 mass% or less.

It is preferable that the positive-electrode active material includes, on its surface, a reaction suppressing layer for suppressing a reaction between the positive-electrode active material and the solid electrolyte. It is sufficient that the reaction suppressing layer is made of a material that has ionic conductivity and is capable of suppressing a reaction between the positive-electrode active material and the solid electrolyte. Examples of the material capable of forming the reaction suppressing layer include oxides that contain Li and at least one element selected from the group consisting of Nb, P, B, Si, Ge, Ti, and Zr, and specific examples thereof include Nb-containing oxides such as $LiNbO_3$, $Li_3PO_4$, $Li_3BO_3$, $Li_4SiO_4$, $Li_4GeO_4$, $LiTiO_3$, and $LiZrOs$. The reaction suppressing layer may contain only one or two or more of these oxides. Furthermore, a plurality of oxides out of these oxides may form a composite compound. Out of these oxides, Nb-containing oxides are preferably used, and $LiNbOs$ is further preferably used.

It is preferable that the reaction suppressing layer is present on a surface at 0.1 to 1.0 parts by mass with respect to 100 parts by mass of the positive-electrode active material. When the reaction suppressing layer is present in this range, it is possible to favorably suppress a reaction between the positive-electrode active material and the solid electrolyte, and to prevent deterioration of load properties.

Examples of the method for forming the reaction suppressing layer on the surface of the positive-electrode active material include a sol-gel method, a mechanofusion method, a CVD method, and a PVD method.

It is possible to use one or two or more of the solid electrolytes listed above as those capable of being used in the negative electrode, as the solid electrolyte in the positive electrode. In order to further improve battery properties, it is desirable to add a sulfide-based solid electrolyte. In particular, the output properties of the battery can be improved using an argyrodite-type sulfide-based solid electrolyte represented by the General Composition Formula (2).

Although it is sufficient to only use a sulfide-based solid electrolyte for a positive electrode, other solid electrolytes can also be used together with a sulfide-based solid electrolyte. Examples of the solid electrolyte that can be used in combination with a sulfide-based solid electrolyte include hydride-based solid electrolytes, and oxide-based solid electrolytes listed above as those capable of being used in the negative electrode. However, the percentage of the solid electrolyte other than the sulfide-based solid electrolyte to the total amount of the solid electrolytes used in a positive-electrode mixture is preferably 30 mass% or less.

From the viewpoint of improving output properties and increasing the capacity of an all-solid-state battery, the content of the solid electrolyte in the positive-electrode mixture is 15 mass% or more, more preferably 20 mass% or more, even more preferably 25 mass% or more, and preferably 45 mass% or less, more preferably 40 mass% or less, and even more preferably 35 mass% or less, in the molded body made of the positive-electrode mixture for the positive electrode of the all-solid-state battery.

A carbon material such as carbon black can be used as a conductive aid for a positive electrode. In particular, a favorable conductive network can be formed in the molded body made of the positive-electrode mixture, using fibrous carbon (carbon fibers) and particulate carbon (carbon particles) together as conductive aids, and accordingly, it is possible to increase the capacity of a battery serving as the molded body made of the positive-electrode mixture and also ensure excellent load properties of the battery.

When carbon fibers and carbon particles are used together as conductive aids for a positive electrode of an all-solid-state battery, it is preferable that the ratio of the fiber length to the fiber size (fiber diameter) of carbon fibers to be used is 20 or more: 1. The fiber length of carbon fibers is more preferably 3 to 600 $\mu$m, and the fiber diameter thereof is even more preferably 1 to 300 nm.

The fiber length and the fiber diameter of carbon fibers used in this specification can be determined by selecting 50 fibers whose contours are recognizable from an image obtained by observing carbon using a scanning electron microscope (SEM) at a magnification of 30000 times, measuring the fiber lengths and the fiber diameters of the selected fibers using the two-point method, and calculating the average (number average) of all of the fibers. Specific examples of the carbon fibers include vapor-grown carbon fibers, carbon nanofibers, and carbon nanotubes. The carbon fibers listed above may be used alone or in combination of two or more.

When carbon fibers and carbon particles are used together as conductive aids for a positive electrode of an all-solid-state battery, it is preferable that the ratio of the longest diameter length to the shortest diameter length of the primary particles of particulate carbon to be used is 1 to 1.3. Also, the average particle diameter of carbon particles is preferably 10 nm to 1000 nm.

The particle diameter of primary particles of particulate carbon used in this specification is a value determined as follows. Fifty carbon particles whose contours are recognizable are selected from an image obtained by observing carbon using a scanning electron microscope (SEM) at a magnification of 30000 times, and the longest diameter and the shortest diameter of the selected particles are measured using the two-point method. Also, the longest diameter of carbon particles is the average (number average) of all of the longest diameters measured, and the shortest diameter thereof is the average (number average) of all of the shortest diameters measured. The average particle diameter of carbon particles is the longest diameter determined as described above (average of all of the longest diameters).

Specific examples of carbon particles include highly crystalline carbon materials such as graphite (natural graphite, artificial graphite), and graphene (single-layer graphene, multi-layer graphene); and low crystalline carbon materials such as carbon black.

When carbon fibers and carbon particles are used together as conductive aids for a positive electrode of an all-solid-state battery, carbon particles containing a hydrophilic moiety at a percentage of 10 mass% or more are preferably used as carbon particles. By using carbon particles containing the hydrophilic moiety at a percentage of 10 mass% or more, the porosity of the molded body made of the positive-electrode mixture can be readily reduced and the density can be easily increased. Also, as described later, carbon particles more preferably form a composite with carbon fibers, and it is possible to easily form a composite with carbon fibers, using carbon particles containing the hydrophilic moiety at a percentage of 10 mass% or more.

Carbon fibers tend to aggregate, and even when carbon fibers are mixed with a positive-electrode active material or the like when preparing a positive-electrode mixture, carbon fibers are often present as aggregated fibers without being disaggregated. If such a positive-electrode mixture is used, aggregated carbon fibers are bulky, and thus it will be difficult to form a molded body made of the positive-electrode mixture with few voids and high density. Therefore, carbon fibers are preferably used as a composite with carbon particles. When carbon fibers form a composite with carbon particles, aggregation of the carbon fibers is suppressed by carbon particles adhering to the surface of the carbon fibers. This facilitates formation of a molded body made of a positive-electrode mixture having a low porosity and a high density, for example.

A composite of carbon fibers and carbon particles can be obtained by dry-mixing carbon fibers and carbon particles, for example.

From the viewpoint of further favorably suppressing aggregation of carbon fibers, in the molded body made of the positive-electrode mixture in the positive electrode for an all-solid-state battery, the ratio of carbon particles to carbon fibers is preferably 10 parts by mass or more, and more preferably 30 parts by mass or more with respect to 100 parts by mass of carbon fibers. Also, from the viewpoint of limiting the specific surface area of all of the conductive aids and further favorably suppressing oxidation of a sulfide-based solid electrolyte in the molded body made of the positive-electrode mixture, the ratio of the carbon particles to the carbon fibers is preferably 100 parts by mass or less, and more preferably 70 parts by mass or less with respect to 100 parts by mass of the carbon fibers.

It is preferable that the total amount of the conductive aids in the molded body made of the positive-electrode mixture of the positive electrode for an all-solid-state battery is 1 to 10 mass%.

A resin binder may be optionally added to a positive-electrode mixture. Examples of the resin binder include fluororesins such as polyvinylidene fluoride (PVDF). However, the resin binder also functions as a resistance component in the positive-electrode mixture, and thus it is desirable that the amount of the resin binder is as small as possible. Therefore, similarly to the negative-electrode mixture, it is preferable that no resin binder is added to a positive-electrode mixture, or if a resin binder is added thereto, the content of the resin binder is 0.5 mass% or less. The content of the resin binder in the positive-electrode mixture is more preferably 0.3 mass% or less, and even more preferably 0 mass% (i.e., no resin binder is added).

When a current collector is used in the positive electrode, examples of the current collector include metal foils, punched metals, nets, expanded metals, and foamed metals that are made of aluminum or stainless steel; and carbon sheets.

A molded body made of a positive-electrode mixture can be formed by compressing, using compression molding or the like, the positive-electrode mixture prepared by mixing the positive-electrode active material, a solid electrolyte, and a conductive aid, and a binder and the like that are added as needed, for example.

When a positive electrode has a current collector, the positive electrode can be produced by attaching a molded body made of a positive-electrode mixture obtained using the above-described method to a current collector through clamping or the like.

From the viewpoint of increasing the capacity of a battery, the thickness of a molded body made of a positive-electrode mixture (when the positive electrode has a current collector, the thickness thereof refers to the thickness of the molded body made of a positive-electrode mixture per side of the current collector. The same applies to the following.) is preferably 200 $\mu$m or more. Also, the thickness of the molded body made of a positive-electrode mixture is usually 2000 $\mu$m or less.

Solid Electrolyte Layer

It is preferable to use a sulfide-based solid electrolyte as the solid electrolyte in the solid electrolyte layer of the all-solid-state battery. Sulfide-based solid electrolytes have high ionic conductivity among solid electrolytes that can be used in all-solid-state batteries, and as described above, the output properties of the battery are improved by using a sulfide-based solid electrolyte not only for the solid electrolyte layer but also for the positive electrode and the negative electrode.

It is more preferable to use the same solid electrolytes listed above as those capable of being used in the negative electrode, as the sulfide-based solid electrolyte. Although it is sufficient to only use a sulfide-based solid electrolyte for a solid electrolyte layer, other solid electrolytes can also be used together with a sulfide-based solid electrolyte. Examples of the solid electrolyte that can be used in combination with a sulfide-based solid electrolyte include the same hydride-based solid electrolytes, and oxide-based solid electrolytes listed above as those capable of being used in the negative electrode.

However, the percentage of the solid electrolyte other than the sulfide-based solid electrolyte to the total amount of the solid electrolytes used in a solid electrolyte layer is preferably 30 mass% or less.

The solid electrolyte layer can be formed by applying a composition for forming a solid electrolyte layer that is prepared by dispersing a solid electrolyte in a solvent, to a substrate, the positive electrode, or the negative electrode, drying the composition, and optionally performing compression molding such as pressing processing.

It is preferable to select a solvent that is less likely to deteriorate a solid electrolyte to serve as the solvent used in the composition for forming a solid electrolyte layer. In particular, the sulfide-based solid electrolytes and the hydride-based solid electrolytes cause chemical reactions with a minute amount of water, and therefore, it is preferable to use nonpolar aprotic solvents such as hydrocarbon solvents including hexane, heptane, octane, nonane, decane, decaline, toluene, and xylene. In particular, it is more preferable to use a super dehydrated solvent in which the water content is reduced to 0.001 mass% (10 ppm) or less. Also, fluorine-based solvents such as "Vertrel (registered trademark)" manufactured by Du Pont-Mitsui Fluorochemicals Co., Ltd., "Zeorora (registered trademark)" manufactured by Zeon Corporation, and "Novec (registered trademark)" manufactured by Sumitomo 3M Limited, and nonaqueous organic solvents such as dichloromethane and diethyl ether can also be used.

The thickness of the solid electrolyte layer is preferably 15 to 300 $\mu$m.

Electrode Body

The positive electrode and the negative electrode can be used for a battery in the form of a layered electrode body obtained by layering these electrodes with the solid electrolyte layer being located therebetween or in the form of a wound electrode body obtained by winding the above-mentioned layered electrode body. Note that it is preferable to form the electrode body by performing compression molding in the state in which the positive electrode, the negative electrode, and the solid electrolyte layer are layered, from the viewpoint of enhancing the mechanical strength of the electrode body.

Form of Battery

FIG. 1 is a schematic cross-sectional view showing an example of an all-solid-state battery according to the present invention. An all-solid-state battery 1 shown in FIG. 1 has a configuration in which a positive electrode 10, a negative electrode 20, and a solid electrolyte layer 30 located between the positive electrode 10 and the negative electrode 20 are sealed in an exterior body constituted by an exterior can 40, a sealing can 50, and a resin gasket 60 located therebetween.

The sealing can 50 is fitted into the opening portion of the exterior can 40 via the gasket 60, and the opening portion of the exterior can 40 is sealed by squeezing the end portion of the opening of the exterior can 40 inward and thereby bringing the gasket 60 into contact with the sealing can 50. Thus, a structure in which the inside of a battery is hermetically sealed is formed.

The exterior can and the sealing can made of stainless steel or the like can be used. Further, polypropylene, nylon, or the like can be used as the material of the gasket. In addition, when heat resistance is required according to the application of a battery, heat-resistant resins whose melting point is higher than 240°C, such as fluororesins such as tetrafluoroethylene-perfluoroalkoxyethylene copolymers (PFA); polyphenylene ether (PEE), polysulfone (PSF), polyarylate (PAR), polyethersulfone (PES), polyphenylene sulfide (PPS), and polyether ether ketone (PEEK), can also be used as the material of the gasket. When a battery is used for an application where heat resistance is required, a glass hermetic seal can also be used to seal the battery.

The form of an all-solid-state battery is not limited to a form in which an all-solid-state battery includes an exterior body constituted by an exterior can, a sealing can, and a gasket, that is, a form generally called a coin cell or a button cell as shown in FIG. 1, and may be a form in which an all-solid-state battery includes an exterior body constituted by a resin film or a metal-resin laminate film, or a form in which an all-solid-state battery includes an exterior body having a bottomed metal tubular (cylindrical or rectangular cylindrical) exterior can having a sealing structure for sealing an opening portion thereof.

The all-solid-state battery according to the present invention may be applied to the same applications as those of conventionally known secondary batteries. However, since the all-solid-state battery according to the present invention includes a solid electrolyte instead of an organic electrolyte solution, it has excellent heat resistance and can thus be favorably used in applications where the all-solid-state battery is exposed to high temperatures.

All-Solid-State Battery System

An all-solid-state battery system according to the present invention includes the all-solid-state battery according to the present invention and a charging apparatus. The upper limit of the voltage applied by the charging apparatus to the all-solid-state battery is determined, and the battery capacity is determined. The battery capacity in the present invention refers to the discharge capacity obtained when the battery is charged with a constant current at 0.2 C to the upper limit charging voltage, charged with a constant voltage to 0.002 C, and discharged at 0.002 C to 1 V

The all-solid-state battery system according to the present invention preferably performs charging with an upper limit voltage of 2.8 V As a result, the all-solid-state battery used in this system can exhibit favorable output properties. Preferably, the charging apparatus in the all-solid-state battery system according to the present invention can charge the all-solid-state battery under the condition where the final voltage is 2.8 V or less, and it is possible to use conventionally known charging apparatuses for all-solid-state batteries, such as a charging apparatus capable of charging with a constant voltage after charging with a constant current, and a charging apparatus capable of pulse charging, for example. Also, a charging/discharging apparatus equipped with a discharging function (an apparatus for charging and discharging a battery) may also be used as the charging apparatus.

The all-solid-state battery system according to the present invention may be applied to the same applications as those of conventionally known secondary batteries and secondary battery systems. However, since the all-solid-state battery system according to the present invention includes a solid electrolyte instead of an organic electrolyte solution, it has excellent heat resistance and can thus be favorably used in applications where the all-solid-state battery system is exposed to high temperatures.

Examples

Hereinafter, the present invention will be described in detail based on examples. However, the present invention is not limited to the following examples.

Example 1

Production of Conductive Aid

Carbon nanotubes ("VGCF (trade name)" manufactured by Showa Denko K.K. : carbon fibers whose ratio between the fiber length and the fiber diameter is 30 or more) and primary particles of particulate carbon having an average particle diameter of 200 nm were dry-mixed using a planetary ball mill at a mass ratio of 2:1 for 60 minutes, and thus a composition of carbon fibers and carbon particles was obtained.

Production of Positive-Electrode Mixture

$LiCo_{0.98}Al_{0.01}Mg_{0.01}O_2$ (positive-electrode active material) having an average particle diameter of 5 $\mu$m and a layer made of LiNbOs on its surface, a sulfide solid electrolyte ($Li_{5.4}PS_{4.4}Cl_{0.8}Br_{0.8}$) having an average particle diameter of 3 um and an argyrodite-type structure, and the composite (conductive aid) of the carbon fibers and the carbon particles were mixed at a mass ratio of 65:31:4 to prepare a positive-electrode mixture. Note that the amount of the layer made of $LiNbO_3$ on the surface of $LiCo_{0.98}Al_{0.01}Mg_{0.01}O_2$ was 0.5 parts by mass with respect to 100 parts by mass of $LiCo_{0.98}Al_{0.01}Mg_{0.01}O_2$.

Production of Negative-Electrode Mixture

Lithium titanium oxide ($Li_4Ti_5O_{12}$, negative-electrode active material) having an average particle diameter of 7 $\mu$m, the sulfide solid electrolyte ($Li_{5.4}PS_{4.4}Cl_{0.8}Br_{0.8}$), and carbon nanotubes ("VGCF" (trade name) manufactured by Showa Denko K.K.), which serve as conductive aids, were mixed at a mass ratio of 50:41:9 and kneaded well to prepare a negative-electrode mixture.

Production of Layered Electrode Body

Next, 73 mg of the positive-electrode mixture was introduced into a powder molding mold, and compression molding was performed using a pressing machine at a pressure of 100 MPa (1 ton·f/cm$^2$). 15 mg of the same sulfide solid electrolyte powder as that used for the positive-electrode mixture was placed on the molded positive-electrode mixture, and compression molding was performed using a pressing machine at a pressure of 100 MPa (1 ton · f/cm$^2$). Further, 100 mg of the negative-electrode mixture was placed on the molded sulfide solid electrolyte to form a layered body having three layers, and compression molding was performed using a pressing machine at a pressure of 1000 MPa (10 ton · f/cm$^2$), and thus a layered electrode body constituted by the positive electrode/solid electrolyte layer/negative electrode was produced.

Production of All-Solid-State Battery and Construction of System

A substrate made of foamed copper ("Celmet (trade name)" made of copper, thickness: 1 mm, porosity: 97%) manufactured by Sumitomo Electric Industries, Ltd. was punched out to a size of 6 mmØ and placed on an inner bottom surface of a stainless steel sealing can to which an annular gasket made of polypropylene was fitted. The layered electrode body of the positive electrode/the solid electrolyte layer/the negative electrode was placed thereon such that the negative electrode of the layered electrode body was located on the substrate side. Then, a substrate made of foamed aluminum ("Celmet" (trade name) made of aluminum, thickness: 1 mm, and porosity: 97%) manufactured by Sumitomo Electric Industries, Ltd. was punched out to the same size as above and placed on the positive electrode of the layered electrode body, and covered by an exterior can made of stainless steel. The opening portion of the exterior can was sealed by clamping the end portion of the opening of the exterior can inward, and thus a flat all-solid-state battery was produced. The flat all-solid-state battery was combined with a charging/discharging apparatus to construct an all-solid-state battery system having an upper limit charging voltage of 2.6 V

Example 2

A layered electrode body was produced in the same manner as in Example 1, except that the mixture amounts were changed such that the amount of the positive-electrode mixture was 75 mg and the amount of the negative-electrode mixture was 98 mg. Aflat all-solid-state battery was produced in the same manner as in Example 1, except that the layered electrode body was used. An all-solid-state battery system was constructed in the same manner as in Example 1, except that the flat all-solid-state battery was used.

Example 3

A layered electrode body was produced in the same manner as in Example 1, except that mixture amounts were changed such that the amount of the positive-electrode mixture was 63 mg and the amount of the negative-electrode mixture was 107 mg. Aflat all-solid-state battery was produced in the same manner as in Example 1, except that the layered electrode body was used. The flat all-solid-state battery was combined with a charging/discharging apparatus to construct an all-solid-state battery system having an upper limit charging voltage of 2.8 V

Example 4

A positive-electrode mixture was prepared in the same manner as in Example 1, except that the positive-electrode active material was changed to $LiNi_{0.33}Co_{0.33}Mn_{0.33}O_2$ having an average particle diameter of 5 $\mu$m and a layer made of LiNbOs on its surface. A layered electrode body was produced in the same manner as in Example 1, except that 69 mg of the positive-electrode mixture was used. Aflat all-solid-state battery was produced in the same manner as in Example 1, except that the layered electrode body was used. An all-solid-state battery system was constructed in the same manner as in Example 1, except that the flat all-solid-state battery was used.

Example 5

A positive-electrode mixture was prepared in the same manner as in Example 1, except that the positive-electrode active material was changed to $LiNi_{0.5}Co_{0.2}Mn_{0.3}O_2$ having an average particle diameter of 5 $\mu$m and a layer made of LiNbOs on its surface. A layered electrode body was produced in the same manner as in Example 1, except that 67 mg of the positive-electrode mixture was used and the amount of the negative-electrode mixture used in Example 1 was changed to 102 mg. Aflat all-solid-state battery was produced in the same manner as in Example 1, except that the layered electrode body was used. An all-solid-state battery system was constructed in the same manner as in Example 1, except that the flat all-solid-state battery was used.

Example 6

A positive-electrode mixture was prepared in the same manner as in Example 1, except that the positive-electrode active material was changed to $LiNi_{0.8}Co_{0.15}Al_{0.05}O_2$ having an average particle diameter of 5 $\mu$m and a layer made of LiNbOs on its surface. A layered electrode body was produced in the same manner as in Example 1, except that 59 mg of the positive-electrode mixture was used and the amount of the negative-electrode mixture used in Example 1 was changed to 109 mg. Aflat all-solid-state battery was produced in the same manner as in Example 1, except that the layered electrode body was used. An all-solid-state battery system was constructed in the same manner as in Example 1, except that the flat all-solid-state battery was used.

Example 7

A positive-electrode mixture was prepared in the same manner as in Example 1, except that the same positive-electrode active material, sulfide solid electrolyte, and conductive aid as those in Example 1 were used, and the mixing ratio was changed to a mass ratio of 70:27:3. A layered electrode body was produced in the same manner as in Example 1, except that 71 mg of the positive-electrode mixture was used and the amount of the negative-electrode mixture used in Example 1 was changed to 102 mg. A flat all-solid-state battery was produced in the same manner as in Example 1, except that the layered electrode body was used. An all-solid-state battery system was constructed in the same manner as in Example 1, except that the flat all-solid-state battery was used.

Example 8

A layered electrode body was produced in the same manner as in Example 1, except that mixture amounts were changed such that the amount of the positive-electrode mixture was 67 mg and the amount of the negative-electrode mixture was 88 mg, and the compression molding condition was 5 ton•f/cm$^2$. A flat all-solid-state battery was produced in the same manner as in Example 1, except that the layered electrode body was used. An all-solid-state battery system was constructed in the same manner as in Example 1, except that the flat all-solid-state battery was used.

Example 9

A layered electrode body was produced in the same manner as in Example 1, except that the mixture amounts were changed such that the amount of the positive-electrode mixture was 61 mg and the amount of the negative-electrode mixture was 108 mg. A flat all-solid-state battery was produced in the same manner as in Example 1, except that the layered electrode body was used. The flat all-solid-state battery was combined with a charging/discharging apparatus to construct an all-solid-state battery system having an upper limit charging voltage of 2.9 V

Comparative Example 1

A layered electrode body was produced in the same manner as in Example 1, except that the mixture amounts were changed such that the amount of the positive-electrode mixture was 76 mg and the amount of the negative-electrode mixture was 98 mg. A flat all-solid-state battery was produced in the same manner as in Example 1, except that the layered electrode body was used. An all-solid-state battery system was constructed in the same manner as in Example 1, except that the flat all-solid-state battery was used.

As for the all-solid-state battery systems of Examples and Comparative Examples, negative electrode discharge utilization rates and recovered capacity maintenance ratios were measured using the following methods.

Negative Electrode Discharge Utilization Rate

First, as for the all-solid-state battery systems of Examples and Comparative Examples, each battery was charged with a constant current value of 0.2 C until the voltage reached the upper limit charging voltage in the corresponding all-solid-state battery system, and charged with a constant voltage until the current value reached 0.002 C, and discharged with a current value of 0.002 C until the voltage reached 1 V The discharge capacity at that time was regarded as the battery capacity Q.

Then, a negative electrode discharge utilization rate X was calculated by dividing the battery capacity Q (mAh) by the mass (g) of the negative-electrode active material in the negative electrode of the all-solid-state battery in the all-solid-state battery system.

$$\text{The negative electrode discharge utilization rate } X = \text{the battery capacity } Q \text{ (mAh)}/$$

$$\text{mass of the negative-electrode active material in the negative electrode (g)}$$

Recovered Capacity Maintenance Ratio

As for the all-solid-state battery systems of Examples and Comparative Examples, each battery was charged with a constant current value of 0.2 C until the voltage reached the upper limit charging voltage in the corresponding all-solid-state battery system, and charged with a constant voltage until the current value reached 0.002 C, and discharged with a current value of 0.002 C until the voltage reached 1 V The discharge capacity (initial capacity) was measured at that time.

As for the all-solid-state battery systems of Examples and Comparative Examples, each battery was charged with a constant current and charged with a constant voltage under the same conditions as those when the initial capacity was measured, and then the all-solid-state batteries used in the corresponding all-solid-state battery systems were stored in a constant-temperature oven at 85°C for 24 hours.

Each of the stored all-solid-state batteries was discharged with a current value of 0.002 C until the voltage reached 1 V, charged with a constant current and charged with a constant voltage under the same conditions as those when the initial capacity was measured, and discharged with a current value of 0.002 C until the voltage reached 1 V The discharge capacity after the battery was stored was measured.

Then, a recovered capacity maintenance ratio of each battery was determined by dividing the discharge capacity after the battery was stored by the initial capacity and representing the obtained value as a percentage, and output properties were evaluated.

The results of the evaluations are shown in Table 1.

Table 1

| | Upper limit charging voltage (V) | Negative electrode discharge utilization rate (mAh/g) | Recovered capacity maintenance ratio (%) |
|---|---|---|---|
| Ex. 1 | 2.6 | 126.4 | 94 |
| Ex. 2 | 2.6 | 132.5 | 90 |
| Ex. 3 | 2.8 | 126.8 | 91 |
| Ex. 4 | 2.6 | 126.7 | 95 |
| Ex. 5 | 2.6 | 126.8 | 94 |
| Ex. 6 | 2.6 | 126.7 | 92 |
| Ex. 7 | 2.6 | 126.3 | 94 |
| Ex. 8 | 2.6 | 124.7 | 94 |
| Ex. 9 | 2.9 | 126.9 | 90 |
| Comp. Ex. 1 | 2.6 | 134.3 | 89 |

As shown in Table 1, it was found that the recovered capacity maintenance ratio after a battery is stored at high temperatures can be increased as a result of the lithium titanium oxide being contained as a negative-electrode active material and performing adjustment using various methods such that the negative electrode discharge utilization rate is 134 mAh/g or less.

The invention may be embodied in other forms without departing from the essential characteristics thereof. The embodiments disclosed in this application are to be considered in all respects as illustrative and not limiting. The scope of the present invention should be construed in view of the appended claims, rather than the foregoing description, and all changes that come within the meaning and range of equivalency of the claims are intended to be embraced therein.

Description of Reference Numerals

1    All-Solid-State Battery
10    Positive electrode
20    Negative electrode
30    Solid electrolyte layer
40    Exterior can
50    Sealing can
60    Gasket

**Claims**

**1.** An all-solid-state battery system comprising:

an all-solid-state battery; and
a charging apparatus,

wherein the all-solid-state battery includes a positive electrode, a negative electrode, and a solid electrolyte layer located between the positive electrode and the negative electrode,

the negative electrode contains a negative-electrode active material and a solid electrolyte,

the negative-electrode active material contains a lithium titanium oxide, and

a negative electrode discharge utilization rate X calculated using an equation below is 134 mAh/g or less,

the negative electrode discharge utilization rate X = battery capacity Q (mAh)/ mass of the negative-electrode active material in the negative electrode (g),

where the battery capacity Q is a discharge capacity (mAh) obtained when the battery is charged with a constant current at 0.2 C to the upper limit charging voltage, charged with a constant voltage to 0.002 C, and discharged at 0.002 C to 1 V

2. The all-solid-state battery system according to claim 1,
wherein the all-solid-state battery is charged with an upper limit voltage of 2.8 V

3. The all-solid-state battery system according to claim 1 or 2,

wherein the positive electrode contains a positive-electrode active material and a solid electrolyte, and
the positive-electrode active material is a lithium-containing composite oxide.

4. The all-solid-state battery system according to claim 1 or 2,
wherein the positive-electrode active material is lithium cobalt oxide.

5. The all-solid-state battery system according to any one of claims 1 to 4,
wherein the solid electrolyte layer contains a solid electrolyte, and
the solid electrolyte is a sulfide-based solid electrolyte.

6. The all-solid-state battery system according to claim 5,
wherein the sulfide-based solid electrolyte is an argyrodite-type sulfide-based solid electrolyte.

FIG. 1

## INTERNATIONAL SEARCH REPORT

| International application No. |
| --- |
| **PCT/JP2021/044315** |

**A. CLASSIFICATION OF SUBJECT MATTER**

*H01M 4/131*(2010.01)i; *H01M 4/485*(2010.01)i; *H01M 4/525*(2010.01)i; *H01M 4/62*(2006.01)i; *H01M 10/0525*(2010.01)i; *H01M 10/0562*(2010.01)i; *H01M 10/058*(2010.01)i
FI: H01M4/131; H01M4/62 Z; H01M10/0562; H01M10/0525; H01M10/058; H01M4/525; H01M4/485

According to International Patent Classification (IPC) or to both national classification and IPC

**B. FIELDS SEARCHED**

Minimum documentation searched (classification system followed by classification symbols)
H01M4/131; H01M4/485; H01M4/525; H01M4/62; H01M10/0525; H01M10/0562; H01M10/058

Documentation searched other than minimum documentation to the extent that such documents are included in the fields searched
Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2001-185141 A (KYOCERA CORP) 06 July 2001 (2001-07-06) paragraphs [0026]-[0054], [0061], fig. 2 | 1-4 |
| A | | 5-6 |
| A | JP 2012-74352 A (IDEMITSU KOSAN CO LTD) 12 April 2012 (2012-04-12) | 1-6 |
| A | JP 2017-152146 A (TOPPAN PRINTING CO LTD) 31 August 2017 (2017-08-31) | 1-6 |
| P, X | JP 2021-163553 A (MAXELL HOLDINGS LTD) 11 October 2021 (2021-10-11) claims, paragraphs [0099]-[0121] | 1-6 |
| P, X | JP 2021-34328 A (MAXELL HOLDINGS LTD) 01 March 2021 (2021-03-01) claims, paragraphs [0074]-[0088] | 1-6 |
| P, X | JP 2021-34326 A (MAXELL HOLDINGS LTD) 01 March 2021 (2021-03-01) claims, paragraphs [0087]-[0107] | 1-6 |

☐ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **13 January 2022** | **25 January 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

INTERNATIONAL SEARCH REPORT
Information on patent family members

International application No.

**PCT/JP2021/044315**

| Patent document cited in search report | | | Publication date (day/month/year) | Patent family member(s) | | | Publication date (day/month/year) |
|---|---|---|---|---|---|---|---|
| JP | 2001-185141 | A | 06 July 2001 | (Family: none) | | | |
| JP | 2012-74352 | A | 12 April 2012 | JP | 2015-99785 | A | |
| JP | 2017-152146 | A | 31 August 2017 | WO | 2017/145657 | A1 | |
| JP | 2021-163553 | A | 11 October 2021 | (Family: none) | | | |
| JP | 2021-34328 | A | 01 March 2021 | (Family: none) | | | |
| JP | 2021-34326 | A | 01 March 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020004685 A